# EUROPEAN PATENT SPECIFICATION

(11) **EP 3 188 875 B1**
(45) Date of publication and mention of the grant of the patent: **30.10.2019**
(21) Application number: 14758543.4
(22) Date of filing: 01.09.2014
(51) Int. Cl.: B23K 26/06, B23K 26/067, B23K 26/073, B23K 26/20, H01M 2/04

(54) **SYSTEM FOR AND METHOD OF WELDING WITH TWO COLLECTIONS OF LASER HEAT SOURCE POINTS**
SYSTEM UND VERFAHREN ZUM SCHWEISSEN MIT ZWEI SAMMLUNGEN VON LASERWÄRMEQUELLPUNKTEN
YSTÈME POUR ET PROCÉDÉ DE SOUDAGE À DEUX ENSEMBLES DE POINTS DE SOURCE DE CHALEUR LASER

(43) Date of publication of application: 12.07.2017
(73) Proprietor: Toyota Motor Europe, 1140 Brussels (BE)
(72) Inventor: TSUKUI, Akira, 1140 Brussels (BE)
(74) Representative: Cabinet Beau de Loménie
(86) International application number: PCT/EP2014/068536
(87) International publication number: WO 2016/034205

(56) References cited:
- DE-A1-102009 053 956
- JP-A- 2001 338 622
- US-A1- 2013 309 000
- US-A1- 2014 124 481

## Description

### Field of the Disclosure

The present disclosure is related to systems and methods for welding, and more particularly to a method of laser welding and a laser welding system according to the preamble of claims 1 and 9 (see, for example, US 2013/309 000 A1).

### Background of the Disclosure

In manufacturing of electronic devices, e.g., batteries, fuel cells, etc., component design often involves various pieces (e.g., two or more thin metal sheets) being assembled together by welding.

Typically, metal sheets are positioned together and placed on a welding support. A welding device (e.g., laser, electron beam/plasma, arc-welder, and/or other similar devices) can then be used to perform a welding operation.

For example, when enclosing a battery (e.g., lithium-ion) within a case and cover, the inner portion of the battery may be assembled or placed within the case, the cover put in place, and a laser welding operation carried out to affix the case and cover to seal closed the battery.

However, in some circumstances, where laser energy enters the inner portions of the battery, undesirable effects can occur (e.g., damage to an electrode). In addition, it is possible that the welding operation does not completely seal the case to the cover, and therefore problems can occur.

According to some available techniques, a laser beam is used to create five or more heat source points in a symmetric cross shape using optical elements (e.g., diffractive optical elements), and a welding operation carried out with the resulting multi-point beam. For example, a configuration wherein a primary heat source point is created in a center portion surrounded at four corners by sub heat source points, thereby forming a rectangular profile. See for example, Japanese patent application JP2014123850, filed June 16, 2014. US 2013/309000 discloses a hybrid laser arc welding process and apparatus. US 2014/124481 discloses a method of manufacturing laser welded steel pipe. JP 2001-338662 discloses a method of manufacturing enclosed type cell.

### SUMMARY OF THE DISCLOSURE

Configurations described above generally involve implementation of a laser oscillator of sufficiently high power to create five or more welding beams, and this can consume energy at a rate that may not be desirable in view of energy and production costs. In addition, a laser oscillator of sufficiently high power capacity can be costly to obtain.

Moreover, in such configurations ghost laser beams produced as a result of beam splitting can result in various patterns around the heat source points, thereby increasing the probability that laser energy will enter the inner portions of the battery and cause undesirable effects.

It has been determined that prior systems lack an effective and efficient system for welding where a reduction in both power and probability of undesirable effects can be achieved. It is accordingly a primary object of the disclosure to provide systems and methods that overcome the deficiencies of the currently available systems and methods.

A method of laser welding according to the present invention is defined in claim 1. The method of laser welding includes arranging at least one heat source point from a first collection of heat source points so as to overlap at least a portion of at least one heat source point from a second collection of heat source points, irradiating a portion of a target with the first and second collections of heat source points, the heat source points maintaining a linear profile within their respective collection, and directing the at least two collections of heat source points in a travel direction along a weld line, each linear profile maintaining an oblique angle relative to the travel direction.

By implementing such a method, laser welding can be accomplished at reduced energy consumption, higher accuracy, and with reduced ghost beam production, thereby lowering risk for undesirable effects caused by the laser to internal parts of a target being welded.

The method may include splitting at least one laser beam to produce at least one of the at least two collections of heat source points.

The directing may include manipulating one or more optical elements based on predefined instructions.

Each collection of heat source points may include at least one primary heat source point and at least two subsidiary heat source points, the at least one primary heat source point preferably having higher power than the at least two subsidiary heat source points.

A second arranging may be provided, wherein, based on a position along the weld line, at least a portion of the first and second collections of heat source points are positioned to form a different pattern of heat source points from the first arrangement.

A first subsidiary heat source point from the first collection and a second subsidiary heat source point from the second collection may overlap at least partially depending on the position along the weld line.

A step of forming a vertex between the linear profiles, may be provided, the vertex being superposed over a gap to be welded. The vertex may be formed from overlap of a first subsidiary heat source point from a first collection and a second subsidiary heat source point from a second collection.

The vertex may be aligned so as to cause the first collection to extend along a first side of the weld line, and the second collection to extend along a second side of the weld line. The first side of the weld line may be opposite to the second side of the weld line. In other words, the first and second collection of heat source points may extend away from one another and away from the weld line in opposite directions.

A laser welding system according to the present invention is defined in claim 9. The laser welding system may include a laser source configured to produce a laser beam, a plurality of beam modifying means, each beam modifying means of the plurality of beam modifying means being configured to split the laser beam to generate a collection of heat source points from the laser beam, the heat source points of each collection maintaining a linear profile, and directing means configured to direct the collections of heat source points in a travel direction along a weld line of a target, and to cause the collections of heat source points to arrange and/or combine based on a position along the weld line. Each of the linear profiles may form an oblique angle relative to the travel direction.

Each of the plurality of beam modifying means may be configured to split the laser beam into no more than five output beams, for example no more than three output beams.

The plurality of beam modifying means may include a diffractive optical element, for example a diffractive grating.

The plurality of beam modifying means may comprise one or more beam shaping means, for example to provide a desired profile shape for a collection of heat source points.

The target can be an elongate battery case and cover, for example, a case and cover for a lithium ion battery.

Each collection of heat source points may include at least one primary heat source point and at least one subsidiary heat source point, the at least one primary heat source point preferably being of higher power than the subsidiary heat source point.

A second laser source and/or a half-mirror may be provided, and where a half-mirror is implemented, the half-mirror may be configured to redirect a first portion of the laser beam to a first beam modifying means, and a second portion of the laser beam to a second beam modifying means.

The linear profiles can be arranged to form a vertex superposed over a gap associated with the weld line.

The vertex may be aligned so as to cause the first collection to extend along a first side of the weld line, and the second collection to extend along a second side of the weld line. The first side of the weld line may be opposite to the second side of the weld line. In other words, the first and second collection of heat source points may extend away from one another and away from the weld line in opposite directions.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Figure 1A shows a prior art welding profile;
Figure 1B is a diagram showing a scanning technique for welding using the welding profile of Figure 1A;
Figure 2A shows an exemplary welding system according to embodiments of the present disclosure;
Figure 2B is an exemplary representation of a target in proximity to the welding system shown at Figure 2A;
Figures 2C and 2D show exemplary cross sections of the target shown in Figures 2A and 2B;
Figures 3A-C are exemplary linear profiles of a collection of heat source points according to embodiments of the present disclosure;
Figures 4A-D are exemplary arrangements of heat source point collections showing exemplary combinations of the collections;
Figure 5 is a schematic representation of an exemplary profile resulting from a single collection of heat source points provided by a beam shaper;
Figure 6 is a diagram representing exemplary positioning of a linear profile relative to a target during a welding operation; and
Figure 7 is a block diagram describing an exemplary method according to embodiments of the present disclosure.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

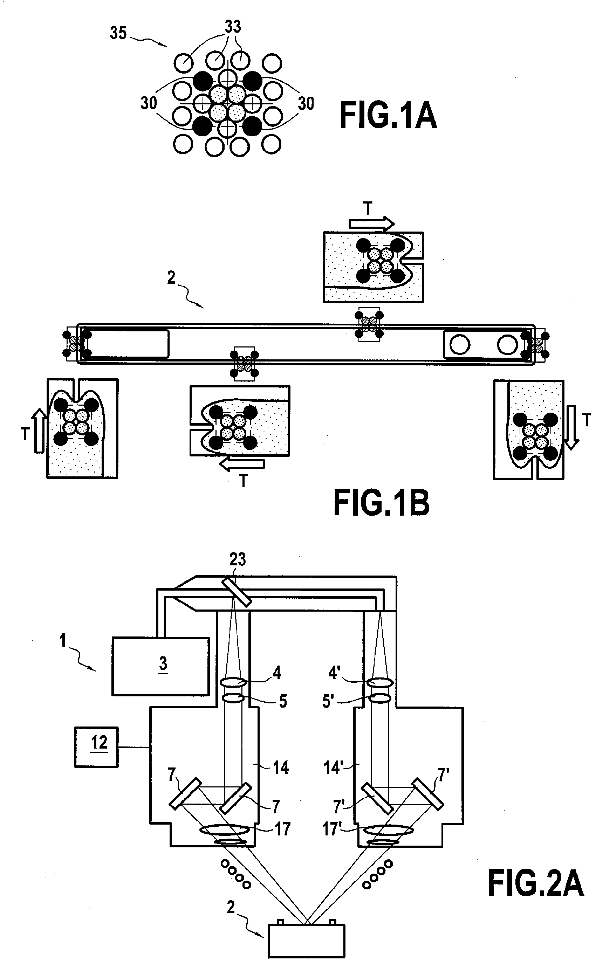

Figure 1A shows a prior art welding profile, while Figure 1B is a diagram showing a scanning technique for welding using the welding profile of Figure 1A. As described above, at least five heat source points 30 have been used in available systems, and this can result in excessive energy consumption, as well as production of various undesirable "ghost beams" 33.

When scanning the weld line using the profile of Figure 1A, as shown at Figure 1B, it is possible that ghost beams 33 may pass between the seam to be welded and enter the internal portion of the target 2. This can lead to undesirable effects.

Figure 2A shows an exemplary welding system 1 configured to remedy the above problems according to embodiments of the present disclosure. Welding system 1 may include a laser source 3, a half-mirror 23 (or optionally a second laser source 3'), a collimator 4, beam modifier 5, a directing unit 14, and a controller 12. One of skill in the art will understand that more or fewer components may be present without departing from the scope of the present disclosure.

Laser source 3 includes any suitable device for providing a laser beam, for example, a laser oscillator. Laser source 3 may provide laser light at any wavelength and energy level suitable for welding materials associated with target 2. For example, suitable laser sources include, ruby lasers, Nd:YAG lasers, fiber lasers, gas lasers (helium, nitrogen, carbon dioxide), etc. As noted above, a second laser source 3', which is not shown for purposes of clarity, may be provided as desired. One of skill in the art will recognize that where provided, second laser source 3' may be configured similarly to laser source 3, or may have a different configuration as desired for accomplishing a particular welding operation. Second laser source 3', when present, may provide a laser beam directly to collimator 4', for example, thereby effectively rendering half-mirror 23 redundant. Half-mirror 23 may, therefore, be omitted in such configurations.

When referring to operations by and/or on laser source 3, unless specifically stated otherwise, one of skill will understand that second laser source 3' is also intended to be included, and redundant references to such operations for each laser source will not be included herein.

According to embodiments of the present disclosure, half-mirror 23 may be provided to facilitate use of a single laser source 3. Half-mirror 23 may be configured to reflect a portion of laser light emitted by laser source 3, while permitting another portion of laser light to pass through half-mirror 23. Therefore, half-mirror 23 may be coated accordingly to accomplish this. For example, half-mirror 23 may be coated so as to allow 50 percent of the light incident upon half-mirror 23 to pass through, while reflecting 50 percent of the incident light.

Half-mirror 23 may be positioned such that light reflected by half-mirror 23 is transmitted to, for example, collimator 4, while light permitted to pass through half-mirror 23 is transmitted to a second mirror for directing, for example, to a delivery medium (e.g., optical fiber).

Collimator 4 may be optionally provided within welding system 1, and can be configured to collimate laser light provided by laser source 3. For example, laser light provided by laser source 3 may pass through a delivery medium (e.g., optical fiber) to arrive at a desired location. Upon exiting the delivery medium, the laser light may be collimated via collimator 4 to desirably align the light waves and narrow the beam before passing through additional optical elements, e.g., beam modifier 5. Collimator 4 may therefore be any lens, mirror, or other suitable element for collimating laser light.

Beam modifier 5 may comprise one or more optical elements capable of splitting a laser beam provided by laser source 3 into a desired number of output laser beams and/or shaping a collection 60 of heat source points 30 formed by the splitting into a desired profile. For example, beam modifiers 5 may comprise a one or more diffractive optical elements (e.g., gratings) fabricated to split an incident laser beam provided by laser source 3 into five or fewer output laser beams as well as one or more beam shapers, for example, an FBS - Gauss- to-Top Hat Focus Beam Shaper by TOPAG. One of skill in the art will recognize that this device is exemplary only.

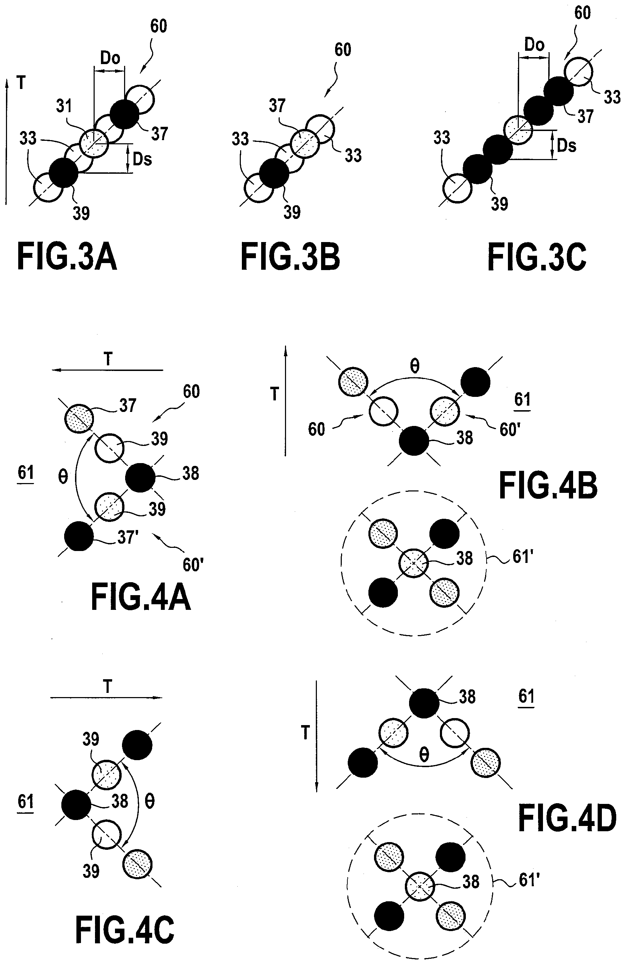

The collection of output beams from beam modifier 5 may, as a result of beam shaper 5, for example, form a linear profile, i.e., the resulting heat source points 30 within collection 60 being aligned linearly as shown at Figures 3A-C.

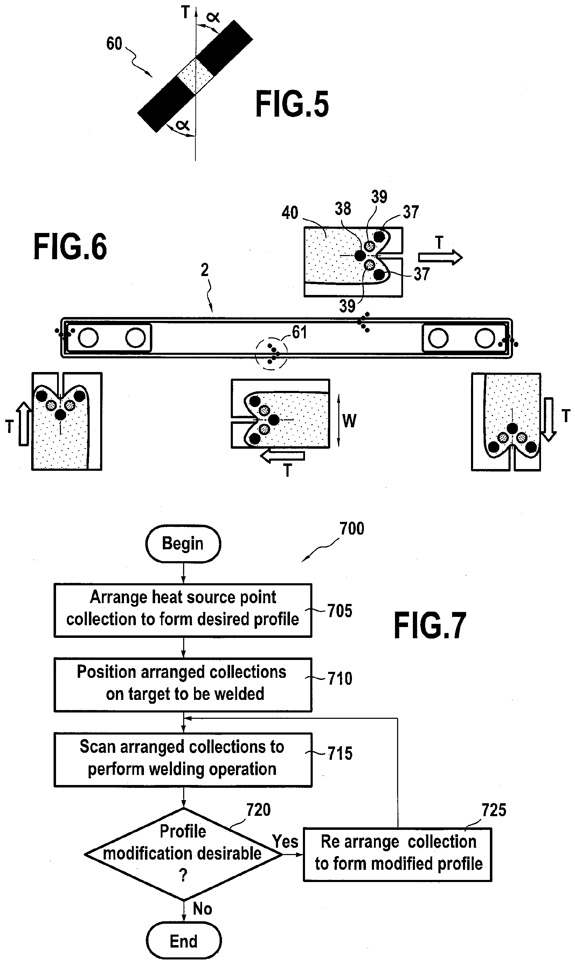

According to embodiments of the present disclosure, and as shown schematically at Figure 5, the linear profile of each collection 60 may be directed to form a predetermined, oblique angle α relative to the travel direction T of heat source points 30. As used herein, "travel direction" is intended to mean the direction of movement of heat source points 30 along a weld line 9 of target 2 as directed by directing unit 14.

Beam modifiers 5 and 5' may be configured similarly to one another (e.g., two of the same diffractive optical elements) or may differ as desired for accomplishing a particular welding operation. For example, a first beam modifier 5 may include a diffractive optical element (e.g., a diffraction grating), while a second beam modifier 5' may include a different type of beam splitting device.

Importantly, when discussing the output beams resulting from a split laser beam, any resulting higher order diffraction beams referred to as "ghost beams 33" are not to be taken into consideration. In other words, "output beam(s)" is used to refer to the intended output of the beam splitter, and not unintended ghost beams 33 formed as a result of splitting the laser beams using beam modifiers 5 and 5'.

Collections of heat source points 30 resulting from output beams of beam modifiers 5 may have greater or lesser incident power based on, for example, a diffractive order and diffractive efficiency associated with each of heat source points 30 and diffraction efficiency, among others. For example, a primary heat source point 31 having a diffractive order of 0 may be positioned between (e.g., at a midpoint of the linear profile) two or more subsidiary heat source points 32 having a diffractive order greater than 0 (e.g., 1, 2, etc.).

Returning to Figure 2A, directing unit 14 is configured to position one or more collections of heat source points 30 in a desired orientation (e.g., by manipulation of beam shaper within beam modifier 5) and to perform scanning with the one or more collections 60 of heat source points 30, i.e., directing of one or more collections 60 of heat source points 30 at a desired location to perform a welding operation. Therefore, directing unit 14 may include a controller 12 and one or more optical elements 7 configured to direct one or more laser beams to and along a weld line 9 of target 2.

Importantly, while controller 12 is discussed in the context of directing unit 14, one of skill in the art will recognize that controller 12 may be integrated with directing unit 14 (i.e., a single structure) or may be provided separately from directing unit 14. One of skill will further recognize that portions of controller 12 may be present with directing unit 14 while other portions of controller 12 are implemented at a location remote from directing unit 14. Further, a second controller 12' may also be provided where desirable, e.g., for controlling a second directing unit 14'. Any such configurations are intended to be covered by the present disclosure.

Controller 12 may comprise any suitable control device capable of generating and sending commands to directing device 14 to accomplish a desired welding task. For example, controller 12 may comprise a PIC based controller, a RISC based controller, etc. Controller 12 may further be configured to interface with one or more networks, e.g., LAN, WAN, Internet, etc. so as to receive instructions via the network.

According to embodiments of the present disclosure, one exemplary directing unit 14/controller 12 may comprise a Galvanoscanner, such as a MIRAMOTION (Y-E data). This exemplary device is not intended to be limiting, however, and any other suitable device may be implemented.

Optical elements 7 may include, for example, one or more mirrors, half-mirrors, lenses, mirrored lenses, fibers, etc. suitable for manipulating light. For example, optical elements 7 may include a first mirror 8 positioned at a 45 degree angle relative to a laser beam so as to reflect light perpendicular to the incident laser beam. A scanning mirror 11 may also be provided and configured to direct the incident laser beam in a travel direction along weld line 9. One of skill will recognize that the described configuration is exemplary only, and that more or fewer optical components 7 may be present. For example, one or more lenses and protective coverings may be present to focus output laser beams.

In addition, directing units 14 and 14' may comprise one or more elements designed to manipulate optical elements 7 in an automated manner. For example, one or more servo motors (not shown) may be provided and configured to rotate, and/or otherwise manipulate optical elements 7 (e.g., scanning mirror 11) so as to perform a desired scanning operation during welding.

Directing units 14 and 14' may also be configured to orient linear profiles associated with output laser beams and resulting collections 60 and 60' of heat source points 30, for example, during scanning. With this in mind, one of ordinary skill in the art will understand that such orientation may be performed and/or assisted by use of a beam shaper, and/or other suitable devices.

During scanning, directing units 14 and 14' may be configured to arrange and move collections of heat source points 30 along a weld line 9 of target 2, according to predetermined instructions programmed into controller 12, thereby performing a weld operation.

Arrangement may include, for example, operating directing units 14 and 14' in conjunction with a beam shaper to position at least one heat source point 30 from a first collection 60 of heat source points 30 so as to overlap at least a portion of at least one heat source point 30' from a second collection of heat source points to result in at least one combined heat source point 38.

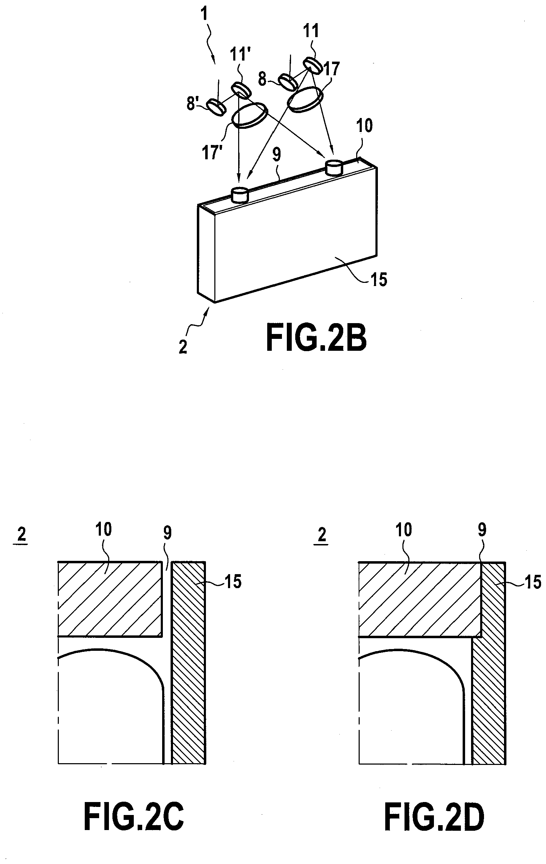

Figures 2C and 2D show exemplary cross sections of target 2 shown in Figures 2A and 2B, and cross sections representing two exemplary welding configurations thereof. Figure 2C shows a gapped welding configuration while Figure 2D represents a stepped welding configuration. Importantly, each of these configurations may be present on a single target depending on a location along weld line 9.

Figures 4A-D are exemplary arrangements of heat source point collections showing exemplary combinations of the collections. As shown, arrangements and positioning of collections 60 and 60' may result in formation of a vertex at combined heat source point 38, i.e., where a first heat source point 30 overlaps a second heat source point 30', such that additional energy is present where combined heat source point 38 impinges upon a target 2. In addition, a vertex angle θ may be created between first collection 60 and second collection 60' of heat source points 30, a desired vertex angle θ depending on, for example, a shape of target 2 to be welded, the welding operation to be undertaken, etc.

For example, where it is desired to maintain a relatively narrow melt pool 40 on target 2, and/or where target 2 is relatively narrow, vertex angle θ may be made relatively small, e.g., 20 degrees. In contrast, where a relatively wide melt pool 40 is desired for target 2, and/or where target 2 has a relatively wide shape, vertex angle θ may be, for example, 90 degrees. Generally, vertex angle θ may vary anywhere between approximately 5 degrees and 175 degrees, according to a desired welding operation, and more particularly, between approximately 20 degrees and 90 degrees.

As one of skill in the art will understand, vertex angle θ depends upon the oblique angle α maintained by each collection 60 and 60', with respect to travel direction T, as described above.

According to some embodiments, and as demonstrated at Figures 4B and 4D, for example, arranging of a first collection and a second collection 60' of heat source points 30 may result in various profile shapes. One of skill in the art will recognize that shapes such as, for example, squares (shown as profile 61'), rectangles, right and left echelons, V formations, etc. may be created by way of arrangement of collections 60 and 60'. Any of these shapes resulting from the combination of two or more collections 60 of heat source points 30 are intended to fall within the scope of the present disclosure.

Based on vertex angle θ formed by combination of first and second collections 60 and 60' heat concentrations may be applied to target 2 in a desired manner along travel direction T of a weld line on target 2. For example, viewing Figure 4A, a pair of leading heat source points 37 and 37' may be present and may first irradiate target 2, followed optionally by one or more additional heat source points 30 located between leading heat source points 37 and 37' and combined heat source point 38. Therefore, each heat source point 30 has a separation distance D_{S} as measured along the travel direction T of the linear profile from a previous or subsequent heat source point 30, as well as an offset distance D_{O} relative to a previous or subsequent heat source point 30 as measured perpendicular to the travel direction T, as shown at Figures 3A and 3C.

Figure 6 is a diagram representing exemplary positioning of a linear profile relative to a target during a welding operation. As can be seen, depending on, for example, an arrangement and a direction of travel T, offset distance D_{O} may narrow or widen as profile 61 moves along a weld line. Thus, using Figures 4A and 5 as an example, as profile 61 travels along weld line 9 of target 2, leading heat source points 37 and 37' are incident upon a portion of target 2 forming a portion of melt pool 40, followed in time by, for example, secondary heat source points 39 and 39', at a separation distance D_{S} from the leading heat source points 37 and 37', and finally by combined heat source point 38.

Such a configuration allows leading heat source points 37 and 37' to irradiate and heat a portion of target 2 to begin formation of melt pool 40 across a relatively wide area of target 2, followed at separation distance D_{S} by a secondary heat source points 39 and 39', the subsequent heat source point 30 irradiating and heating at offset distance D_{O} within melt pool 40 formed by leading heat source points 37 and 37', and thereby further narrowing the distance between heat source points 30 within melt pool 40, while permitting melt pool 40 to maintain width W. This further permits a beneficial closing and/or sealing of weld line 9, so that a gap to be welded is effectively closed by the narrowing nature of profile 61 moving along the gap.

Taking the example of Figure 4C, the inverse of the process above occurs based on the inverted V formation relative to that of Figure 4A. Therefore, one of skill in the art will understand that a widening of melt pool 40 occurs as profile 61 moves along a weld line of target 2.

According to embodiments of the present disclosure, during welding of portions of target 2, for various geometries associated with target 2 modification of profile 61 may be desirable to accomplish the welding operation. For example, where a gapped welding configuration exists at a position along weld line 9 (e.g., see Figure 2C), a V configuration, such as shown at Figures 4A and 4C, for example, may be implemented. During welding of a stepped portion of case 15 and cover 10 (see e.g., Figure 2D), controller 12 may cause an arrangement for first and second collections 60 and 60' to form a square profile 61', with combined heat source point 38 at the center of square profile 61'.

By performing such a rearrangement, the welding operation can be configured to limit potential adverse effects on the battery, while maximizing weld efficiency and quality. One of skill in the art will recognize that the configuration described above is exemplary only and multiple such configurations are available depending on, e.g., target 2, desired melt pool 40, etc. Any such configuration is intended to fall within the scope of the present disclosure.

Figure 6 is a block diagram 700 describing an exemplary method according to embodiments of the present disclosure. According to methods of the present disclosure, controller 12 may arrange two or more collections of heat source points 30 such that at least one heat source point 30 from a first collection 60 of heat source points overlaps at least a portion of at least one heat source point 30' from a second collection 60' of heat source points, thereby forming a combined heat source point 38 as well as a welding profile 61 from the combination (step 705).

Controller 12 may then position welding profile 61 at a position along a weld line 9 of a target 2 to be welded (step 710) and begin to move profile 61 along a travel direction T of the weld line 9 of target 2 so as to perform a scanning weld operation (step 715).

During scanning using profile 61, and depending on factors such as, for example, a shape of profile 61, a shape of target 2, etc., a modification to the shape of profile 61 may be desirable (step 720:yes). For example, where a step is present along a weld line of target 2, it may be desirable to modify profile 61 to accommodate a change in shape of target 2, and controller 12 may then cause profile 61 to change, for example, to profile 61', with combined heat source point 38 lying in the middle of a square profile (step 725). Of course one of skill will recognize that any other suitable profile may be used, with combined heat source point 38 lying at a desired location within profile 61. Scanning may then continue, with profile 61 being modified as desired to accommodate the various shapes encountered along the weld line. Alternatively, no modification to profile 61 may be desirable (step 720:no) and profile 61 may remain intact throughout the entire welding operation.

An additional benefit of implementing systems and methods of the present disclosure, is that by reducing the number of output laser beams/heat source points, power consumed by laser source 3 may be significantly reduced leading to substantial cost savings.

One of skill in the art will recognize that variations may be made to structures and methods described herein. For example, while exemplary embodiments have been discussed using two heat source point collections 60 and 60', one of skill will recognize that three, four, or more heat source point collections could be implemented depending on a welding task.

In addition, the examples described herein have generally included reference to three heat source points 30 in each collection of heat source points. However, one of skill will recognize that the above disclosure is equally applicable where two, four, five, and more heat source points are present in each collection.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present disclosure.

It is intended that the specification and examples be considered as exemplary only, with a scope of the disclosure being indicated by the following claims.

## Claims

1. A method of laser welding,
**characterised by** comprising the following steps :
arranging at least one heat source point (30) from a first collection (60) of heat source points (30) so as to overlap at least a portion of at least one heat source point (30) from a second collection (60') of heat source points;
irradiating a portion of a target (2) with the first and second collections (60, 60') of heat source points (30), the heat source points (30) maintaining a linear profile within their respective collection; and
directing the at least two collections (60, 60') of heat source points (30) in a travel direction along a weld line, each linear profile maintaining an oblique angle (α) relative to the travel direction.

2. The method for laser welding according to claim 1, comprising splitting at least one laser beam to produce at least one of the at least two collections (60, 60') of heat source points (30).

3. The method according to any of the previous claims, wherein the directing comprises manipulating one or more optical elements (7) based on predefined instructions.

4. The method according to any of the previous claims, wherein each collection (60, 60') of heat source points (30) comprises at least one primary heat source point (31) and at least two subsidiary heat source points (39), the at least one primary heat source (31) point preferably having higher power than the at least two subsidiary heat source points (39).

5. The method according to claim 4, comprising a second arranging wherein, based on a position along the weld line, at least a portion of the first and second collections (60, 60') of heat source points (30) are positioned to form a different pattern of heat source points (30) from the first arranging.

6. The method according to claim 4, wherein a first subsidiary heat source point (39) from a first collection (60) and a second subsidiary heat source point (39') from a second collection (60') overlap at least partially depending on the position along the weld line.

7. The method according to any of the preceding claims, comprising forming a vertex between the linear profiles, the vertex being superposed over a gap to be welded.

8. The method according to claim 7, wherein the vertex is formed of a first subsidiary heat source point (39) from a first collection (60) and a second subsidiary heat source point (39') from a second collection (60').

9. A laser welding system (1), comprising:
a laser source (3) configured to produce a laser beam;
**characterised by** :
a plurality of beam modifying means (5), each beam modifying means (5) of the plurality of beam modifying means (5) being configured to split the laser beam to generate a collection (60; 60') of heat source points (30) from the laser beam, the heat source points (30) of each collection (60, 60') maintaining a linear profile, wherein the linear profiles are arranged to form a vertex superposed over a gap associated with a weld line of a target (2); and
directing means (14) configured to direct the collections (60, 60') of heat source points (30) in a travel direction along the weld line of the target (2), and to cause the collections (60, 60') of heat source points (30) to combine based on a position along the weld line, so that at least one heat source point (30) from the collection (60) overlaps at least a portion of at least one heat source point (30) from the other collection (60'), so that each of the linear profiles forms an oblique angle relative to the travel direction.

10. The laser welding system (1) according to claim 9, wherein each of the plurality of beam modifying means (5) is configured to split the laser beam into no more than five output beams, preferably no more than three output beams.

11. The laser welding system (1) according to any of claims 9-10, wherein the plurality of beam modifying means (5) comprise a diffractive optical element, preferably a diffractive grating.

12. The laser welding system (1) according to any of claims 9-11, wherein the target (2) is an elongate battery case (15) and cover (10), preferably for a lithium ion battery.

13. The laser welding system (1) according to any of claims 9-12, wherein each collection of heat source points (60, 60') comprises at least one primary heat source point (31) and at least one subsidiary heat source point (39; 39'), the at least one primary heat source point (31) preferably being of higher power than the subsidiary heat source point (39; 39').

14. The laser welding system (1) according to any of claims 9-13, comprising a second laser source and/or a half-mirror (23), the half-mirror being preferably configured to redirect a first portion of the laser beam to a first splitting means, and a second portion of the laser beam to a second splitting means.

## Patentansprüche

1. Verfahren zum Laserschweißen, **gekennzeichnet durch** Umfassen der folgenden Schritte:
Anordnen von mindestens einer Wärmequellenstelle (30) aus einer ersten Sammlung (60) von Wärmequellenstellen (30), um mindestens einen Teil von mindestens einer Wärmequellenstelle (30) aus einer zweiten Sammlung (60') von Wärmequellenstellen zu überlappen,
Bestrahlen eines Teils eines Ziels (2) mit der ersten und zweiten Sammlung (60, 60') von Wärmequellenstellen (30), wobei die Wärmequellenstellen (30) ein lineares Profil innerhalb ihrer jeweiligen Sammlung beibehalten, und
Lenken der mindestens zwei Sammlungen (60, 60') von Wärmequellenstellen (30) in einer Bewegungsrichtung entlang einer Schweißnaht, wobei jedes lineare Profil einen schrägen Winkel (α) relativ zur Bewegungsrichtung beibehält.

2. Verfahren zum Laserschweißen nach Anspruch 1, welches das Teilen mindestens eines Laserstrahls umfasst, um mindestens eine von den mindestens zwei Sammlungen (60, 60') von Wärmequellenstellen (30) zu produzieren.

3. Verfahren nach einem der vorhergehenden Ansprüche, wobei das Lenken ein Verstellen eines oder mehrerer optischer Elemente (7) basierend auf vordefinierten Anweisungen umfasst.

4. Verfahren nach einem der vorhergehenden Ansprüche, wobei jede Sammlung (60, 60') von Wärmequellenstellen (30) mindestens eine primäre Wärmequellenstelle (31) und mindestens zwei sekundäre Wärmequellenstellen (39) umfasst, wobei die mindestens eine primäre Wärmequellenstelle (31) vorzugsweise eine höhere Energie als die mindestens zwei sekundären Wärmequellenstellen (39) aufweist.

5. Verfahren nach Anspruch 4, welches ein zweites Anordnen umfasst, wobei basierend auf einer Position entlang der Schweißnaht mindestens ein Teil der ersten und zweiten Sammlung (60, 60') von Wärmequellenstellen (30) positioniert wird, um ein gegenüber dem ersten Anordnen anderes Muster von Wärmequellenstellen (30) zu bilden.

6. Verfahren nach Anspruch 4, wobei sich eine erste sekundäre Wärmequellenstelle (39) aus einer ersten Sammlung (60) und eine zweite sekundäre Wärmequellenstelle (39') aus einer zweiten Sammlung (60') je nach der Position entlang der Schweißnaht zumindest teilweise überlappen.

7. Verfahren nach einem der vorhergehenden Ansprüche, welches das Bilden eines Scheitelpunkts zwischen den linearen Profilen umfasst, wobei der Scheitelpunkt einem zu schweißenden Spalt überlagert wird.

8. Verfahren nach Anspruch 7, wobei der Scheitelpunkt aus einer ersten sekundären Wärmequellenstelle (39) aus einer ersten Sammlung (60) und einer zweiten sekundären Wärmequellenstelle (39') aus einer zweiten Sammlung (60') gebildet wird.

9. Laserschweißsystem (1), umfassend:
eine Laserquelle (3), die dazu ausgestaltet ist, einen Laserstrahl zu produzieren,
**gekennzeichnet durch**:
mehrere Strahlmodifizierungsmittel (5), wobei jedes Strahlmodifizierungsmittel (5) der mehreren Strahlmodifizierungsmittel (5) dazu ausgestaltet ist, den Laserstrahl zu teilen, um eine Sammlung (60, 60') von Wärmequellenstellen (30) von dem Laserstrahl zu erzeugen, wobei die Wärmequellenstellen (30) jeder Sammlung (60, 60') ein lineares Profil beibehalten, wobei die linearen Profile angeordnet sind, um einen Scheitelpunkt zu bilden, der einem Spalt überlagert wird, der einer Schweißnaht eines Ziels (2) zugeordnet ist, und
Lenkungsmittel (14), die dazu ausgestaltet sind, die Sammlungen (60, 60') von Wärmequellenstellen (30) in einer Bewegungsrichtung entlang der Schweißnaht des Ziels (2) zu lenken und die Sammlungen (60, 60') von Wärmequellenstellen (30) zu veranlassen, sich basierend auf einer Position entlang der Schweißnaht zu kombinieren, so dass mindestens eine Wärmequellenstelle (30) aus der Sammlung (60) mindestens einen Teil von mindestens einer Wärmequellenstelle (30) aus der anderen Sammlung (60') überlappt, so dass jedes der linearen Profile einen schrägen Winkel relativ zur Bewegungsrichtung bildet.

10. Laserschweißsystem (1) nach Anspruch 9, wobei jedes der mehreren Strahlmodifizierungsmittel (5) dazu ausgestaltet ist, den Laserstrahl in nicht mehr als fünf Ausgangsstrahlen, vorzugsweise nicht mehr als drei Ausgangsstrahlen, zu teilen.

11. Laserschweißsystem (1) nach einem der Ansprüche 9 - 10, wobei die mehreren Strahlmodifizierungsmittel (5) ein optisches Beugungselement, vorzugsweise ein Beugungsgitter, umfassen.

12. Laserschweißsystem (1) nach einem der Ansprüche 9 - 11, wobei das Ziel (2) ein längliches Batteriegehäuse (15) und eine Abdeckung (10), vorzugsweise für eine Lithiumionenbatterie, ist.

13. Laserschweißsystem (1) nach einem der Ansprüche 9 - 12, wobei jede Sammlung von Wärmequellenstellen (60, 60') mindestens eine primäre Wärmequellenstelle (31) und mindestens eine sekundäre Wärmequellenstelle (39, 39') umfasst, wobei die mindestens eine primäre Wärmequellenstelle (31) vorzugsweise eine höhere Energie als die sekundäre Wärmequellenstelle (39, 39') aufweist.

14. Laserschweißsystem (1) nach einem der Ansprüche 9 - 13, welches eine zweite Laserquelle und/oder einen Halbspiegel (23) umfasst, wobei der Halbspiegel vorzugsweise dazu ausgestaltet ist, einen ersten Teil des Laserstrahls zu einem ersten Teilungsmittel und einen zweiten Teil des Laserstrahls zu einem zweiten Teilungsmittel umzulenken.

## Revendications

1. Procédé de soudage laser, **caractérisé en ce qu'**il comporte les étapes suivantes :
prévoir au moins un point de source de chaleur (30) d'un premier ensemble (60) de points de source de chaleur (30) de façon à chevaucher au moins une partie d'au moins un point de source de chaleur (30) d'un deuxième ensemble (60') de points de source de chaleur ;
irradier une partie d'une cible (2) avec les premier et deuxième ensembles (60, 60') de points de source de chaleur (30), les points de source de chaleur (30) maintenant un profil linéaire dans leur ensemble respectif ; et
orienter les au moins deux ensembles (60, 60') de points de source de chaleur (30) dans une direction de déplacement le long d'une ligne de soudure, chaque profil linéaire maintenant un angle oblique (α) par rapport à la direction de déplacement.

2. Procédé pour le soudage laser selon la revendication 1, comportant le fait de diviser au moins un faisceau laser pour produire au moins un des au moins deux ensembles (60, 60') de points de source de chaleur (30).

3. Procédé selon l'une quelconque des revendications précédentes, selon lequel l'action d'orientation comporte le fait de manipuler un ou plusieurs éléments optiques (7) sur la base d'instructions prédéfinies.

4. Procédé selon l'une quelconque des revendications précédentes, selon lequel chaque ensemble (60, 60') de points de source de chaleur (30) comporte au moins un point de source de chaleur principal (31) et au moins deux points de source de chaleur auxiliaires (39), le au moins un point de source de chaleur principal (31) ayant de préférence une puissance plus élevée que les au moins deux points de source de chaleur auxiliaires (39).

5. Procédé selon la revendication 4, comportant un deuxième agencement dans lequel, sur la base d'une position long de la ligne de soudure, au moins une partie des premier et deuxième ensembles (60, 60') de points de source de chaleur (30) est positionnée pour former une configuration différente de points de source de chaleur (30) du premier agencement.

6. Procédé selon la revendication 4, selon lequel un premier point de source de chaleur auxiliaire (39) d'un premier ensemble (60) et un deuxième point de source de chaleur auxiliaire (39') d'un deuxième ensemble (60') se chevauchent au moins partiellement en fonction de la position le long de la ligne de soudure.

7. Procédé selon l'une quelconque des revendications précédentes, comportant le fait de former un point d'intersection entre les profils linéaires, le point d'intersection étant superposé au-dessus d'un espace devant être soudé.

8. Procédé selon la revendication 7, selon lequel le point d'intersection est constitué d'un premier point de source de chaleur auxiliaire (39) d'un premier ensemble (60) et d'un deuxième point de source de chaleur auxiliaire (39') d'un deuxième ensemble (60').

9. Système de soudage laser (1), comportant :
une source de laser (3) configurée pour produire un faisceau laser ;
**caractérisé par** :
une pluralité de moyens de modification de faisceau (5), chacun des moyens de modification de faisceau (5) de la pluralité de moyens de modification de faisceau (5) étant configuré pour diviser le faisceau laser pour générer un ensemble (60 ; 60') de points de source de chaleur (30) à partir du faisceau laser, les points de source de chaleur (30) de chaque ensemble (60, 60') maintenant un profil linéaire, dans lequel les profils linéaires sont prévus pour former un point d'intersection superposé au-dessus d'un espace associé à une ligne de soudure d'une cible (2) ; et
des moyens d'orientation (14) configurés pour orienter les ensembles (60, 60') de points de source de chaleur (30) dans une direction de déplacement le long de la ligne de soudure de la cible (2), et pour amener les ensembles (60, 60') de points de source de chaleur (30) à se combiner sur la base d'une position le long de la ligne de soudure, de telle sorte qu'au moins un point de source de chaleur (30) de l'ensemble (60) chevauche au moins une partie d'au moins un point de source de chaleur (30) de l'autre ensemble (60'), de telle sorte que chacun des profils linéaires forme un angle oblique par rapport à la direction de déplacement.

10. Système de soudage laser (1) selon la revendication 9, dans lequel chacun de la pluralité de moyens de modification de faisceau (5) est configuré pour diviser le faisceau laser en pas plus de cinq faisceaux de sortie, de préférence pas plus de trois faisceaux de sortie.

11. Système de soudage laser (1) selon l'une quelconque des revendications 9 à 10, dans lequel la pluralité de moyens de modification de faisceau (5) comporte un élément optique de diffraction, de préférence une grille de diffraction.

12. Système de soudage laser (1) selon l'une quelconque des revendications 9 à 11, dans lequel la cible (2) est un boîtier (15) et un couvercle (10) de batterie allongés, de préférence pour une batterie lithium-ion.

13. Système de soudage laser (1) selon l'une quelconque des revendications 9 à 12, dans lequel chaque ensemble de points de source de chaleur (60, 60') comporte au moins un point de source de chaleur principal (31) et au moins un point de source de chaleur auxiliaire (39 ; 39'), le au moins un point de source de chaleur principal (31) étant de préférence d'une puissance plus élevée que le point de source de chaleur auxiliaire (39 ; 39').

14. Système de soudage laser (1) selon l'une quelconque des revendications 9 à 13, comportant une deuxième source de laser et/ou un miroir semi-réfléchissant (23), le miroir semi-réfléchissant étant de préférence configuré pour réorienter une première partie du faisceau laser vers des premiers moyens de division, et une deuxième partie du faisceau laser vers des deuxièmes moyens de division.
